# EUROPÄISCHE PATENTSCHRIFT

(11) **EP 1 338 076 B1**
(45) Veröffentlichungstag und Bekanntmachung des Hinweises auf die Patenterteilung: **08.09.2004**
(21) Anmeldenummer: 01999031.6
(22) Anmeldetag: 30.11.2001
(51) Int. Cl.: H02K 3/12, H02K 15/00

(54) **STATOR FÜR EINE ELEKTRISCHE MASCHINE UND HERSTELLUNGSVERFAHREN DAFÜR**
STATOR FOR AN ELECTRIC MACHINE AND METHOD FOR PRODUCING THE SAME
STATOR POUR UNE MACHINE ELECTRIQUE ET SON PROCEDE DE PRODUCTION

(30) Priorität: 30.11.2000 DE 10059575
(43) Veröffentlichungstag der Anmeldung: 27.08.2003
(73) Patentinhaber: Compact Dynamics GmbH, 82319 Starnberg (DE)
(72) Erfinder: Gründl, Andreas, 81377 München (DE); Hoffmann, Bernhard, 82319 Starnberg (DE)
(74) Vertreter: Schmidt, Steffen J., Dipl.-Ing.
(86) Internationale Anmeldenummer: PCT/EP2001/014011
(87) Internationale Veröffentlichungsnummer: WO 2002/045241

(56) Entgegenhaltungen:
- EP-A- 0 887 906
- EP-A- 1 039 616
- CH-A- 172 177
- GB-A- 345 177
- PATENT ABSTRACTS OF JAPAN vol. 015, no. 428 (E-1128), 30. Oktober 1991 (1991-10-30) -& JP 03 178537 A (HITACHI LTD), 2. August 1991 (1991-08-02)

## Beschreibung

### Hintergrund der Erfindung

Die vorliegende Erfindung betrifft eine elektrische Maschine und einen Stator für eine elektrische Maschine und ein Herstellungsverfahren dafür.

### Hintergrund der Erfindung

Derartige elektrische Maschinen und Statoren hierfür sind in den unterschiedlichsten Ausgestaltungen im Stand der Technik bekannt.

Aus der EP 1 039 616 A2 ist eine elektrische Maschine mit einem Innenrotor und einem Stator bekannt, der mehrere nebeneinander angeordnete Nuten aufweist. Statorwicklungen sind aus in den Nuten angeordneten Leiterstäben sowie Wicklungsköpfe bildenden Leiterteilen aufgebaut, wobei die Leiterstäbe an ihren Enden mit den Leiterteilen vernietet sind.

Aus der DE 43 21 236 C1 ist eine mehrphasige elektrische Maschine mit einer Wicklung aus flachen, in Nuten eingelegten Leiterformteilen bekannt. Beim Übergang aus einer an einem Stator ausgebildeten Nut in einen Wickelkopf erfolgt eine Vergrößerung des Leiterquerschnitts des Leiterformteils in Richtung der Nutbreite. Verbindungsstellen, die alle an Wickelkopfstirnseiten liegen, sind durch Schweißen oder Löten gebildet.

Unter einer elektrischen Maschine wird hierbei sowohl ein elektrischer Motor als auch ein elektrischer Generator verstanden, wobei es unerheblich ist, ob diese Maschine als rund laufende Maschine oder zum Beispiel als Linearmotor ausgestaltet ist. Außerdem ist die Erfindung sowohl bei Innenläufermaschinen als auch bei Außenläufermaschinen einsetzbar.

Ein wesentlicher Faktor, der den Wirkungsgrad einer elektrischen Maschine erheblich mitbestimmt, ist der Füllfaktor der (Stator-)Wicklung (d.h. das Verhältnis des Wicklungsdrahtvolumens zum Gesamtvolumen der Wicklungskammer). Ein weiterer, den Wirkungsgrad erheblich mitbestimmender Faktor ist die Gestaltung der (axial über den Statorkörper hinausragenden) Wicklungsköpfe der Statorwicklung. Da insbesondere der über den Statorkörper axial hinausragende Wicklungsteil elektromagnetisch nicht wirksam ist, gehen die Bestrebungen dahin, diesen Teil der Wicklungen möglichst raumsparend zu gestalten. Dies ist insbesondere bei Mehrphasen-Maschinen wichtig, da hier die räumliche Gestaltung der Wicklungsköpfe besonders aufwendig ist.

Um den Füllfaktor der (Stator-)Wicklung zu erhöhen ist es bekannt, in die Wicklungskammern im Querschnitt rechteckige Leiterstäbe einzubauen, die mit entsprechenden Leiterteilen in den Spulenköpfen zu den jeweiligen Wicklungen verbunden sind.

### Der Erfindung zugrundeliegendes Problem

Die Verbindungsstellen der Leiterstäbe in den Wicklungskammern mit den Leiterteilen in den Spulenköpfen sind für die Zuverlässigkeit der jeweiligen elektrischen Maschine ein wesentlicher Faktor. Dies gilt umsomehr, als die räumlich sehr beengten Verhältnisse im Bereich der Wicklungsköpfe eine Reihe von bekannten Verbindungstechniken ausschließen.

Alle bekannten Konzepte haben gemeinsam, daß bei ausreichend kompaktem Aufbau die Zuverlässigkeit für den Groß-Serien-Einsatz nicht erreicht wird. Außerdem sind bekannte Vorgehensweisen in der Herstellung sehr kostenintensiv.

Auch scheidet zum Beispiel das Punktschweißen zumindest bei Maschinen im Leistungsbereich unter einem Megawatt aufgrund der dort vorherrschenden Größenverhältnisse aus, da die Gefahr des Verklebens der Schweiß-Elektroden mit den zu verschweißenden Teilen sehr hoch ist.

### Aufgabe der Erfindung

Aufgabe der vorliegenden Erfindung ist es, eine kompakte elektrische Maschine, die kostengünstig im Großserienbetrieb hergestellt werden kann, sowie ein Verfahren zu deren Herstellung bereitzustellen.

### Erfindungsgemäße Lösung

Zur Behebung der Nachteile des Standes der Technik lehrt die Erfindung eine elektrische Maschine, die durch die Merkmale des Anspruchs 1 definiert ist sowie ein Verfahren zur Herstellung einer solchen elektrischen Maschine.

### Aufbau und Weiterbildungen der erfindungsgemäßen Lösung

Erfindungsgemäß wird die Aufgabe gelöst durch eine elektrische Maschine mit einem Stator, der mehrere, an seinem Umfang verteilt angeordnete, Wicklungskammern bildende Nuten zur Aufnahme von wenigstens einer Statorwicklung aufweist, wobei jede Statorwicklung aus im Querschnitt im wesentlichen rechteckigen Leiterstäben in den Wicklungskammern und Wicklungsköpfe bildenden Leiterteilen aufgebaut ist, wobei die Leiterstäbe an ihren Enden mit den Leiterteilen elektrisch verbunden sind, indem jedes der Leiterteile einen im wesentlichen U-förmig gestalteten Endabschnitt mit zwei gegenüberliegenden Schenkeln aufweist, deren einander zugewandte Innenseiten mit entsprechenden Seitenflächen eines Endabschnittes eines der Leiterstäbe verbunden sind.

Diese Lösung erlaubt eine besonders sichere und, auch im Massenfertigungsbetrieb, kostengünstige Herstellung der Statorwicklungen mit hervorragenden elektrischen und mechanischen Eigenschaften.

In einer ersten bevorzugten Ausführungsform weist die Verbindung zwischen dem Endabschnitt des Leiterstabes und dem Endabschnitt des Leiterteils eine Schicht aus Hartlot, vorzugsweise Silberhartlot, Zinnhartlot oder dergl. auf. Alternativ dazu kann die Verbindung zwischen dem Endabschnitt des Leiterstabes und dem Endabschnitt des Leiterteils auch eine Schicht aus Hochtemperaturweichlot, vorzugsweise mit einem Schmelzpunkt von mindestens etwa 380 Grad Celsius aufweisen.

Um zu vermeiden, daß im Bereich der Wicklungsköpfe eine Verdickung der Wicklung (mit dem damit verbundenen Raumproblem) entsteht, ist vorzugsweise der Endabschnitt des Leiterstabes wenigstens etwa um die Wanddicke des im wesentlichen U-förmig gestalteten Endabschnittes des Leiterteiles verjüngt. Dies ist an all den Seitenflächen vorzusehen, an denen der Endabschnitt des Leiterteils an dem Endabschnitt des Leiterstabes anliegt.

Wenn der Endabschnitt des Leiterteils lediglich an zwei (zum Beispiel einander gegenüberliegenden) Seitenflächen des Endabschnitts des Leiterstabes zur Anlage und zur (materialschlüssigen) Verbindung kommt, kann die Packungsdichte der Wicklungslagen im Wicklungskopf gleich groß gehalten werden wie in der Wicklungsnut.

Vorzugsweise weist jeder der einander gegenüberliegenden Schenkel an seiner dem Endabschnitt des Leiterstabes zugewandten Innenfläche einen Vorsprung auf, der mit den entsprechenden Seitenflächen des Endabschnittes des Leiterstabes kontaktiert. Dies erleichtert bei dem Verbindungsvorgang einen definierten Ablauf des Materialschlusses.

Auf besonders einfache Weise kann die materialschlüssige Verbindung durch Elektro-Impuls-Schweißen ausgeführt sein.

Insbesondere bei mehrphasigen elektrischen Maschinen ist es notwendig, daß die Wicklungsköpfe zueinander seitlich versetzt sind. Dies ist am einfachsten dadurch zu realisieren, daß das Leiterteil über den Endabschnitt des Leiterstabes axial hinausragt und abgekröpft ist.

Die Erfindung betrifft auch ein Verfahren zur Herstellung einer elektrischen Maschine mit einem Stator, der mehrere, an seinem Umfang verteilt angeordnete, Wicklungskammern bildende Nuten zur Aufnahme von wenigstens einer Statorwicklung aufweist, wie vorstehend definiert, mit den Schritten: Einbringen eines im wesentlichen rechteckigen Leiterstabes in eine Wicklungskammer, so daß an wenigstens einer Stirnseite des Stators ein Endabschnitt des Leiterstabes übersteht, materialschlüssiges Anbringen eines Leiterteils am überstehenden Endabschnitt des Leiterstabes, wobei das Leiterteil einen im wesentlichen U-förmig gestalteten Endabschnitt mit zwei gegenüberliegenden Schenkeln aufweist, deren einander zugewandte Innenseiten mit entsprechenden Seitenflächen eines Endabschnittes eines der Leiterstäbe verbunden sind.

Dabei umfassen die zwei gegenüberliegenden Schenkel die jeweiligen Seitenflächen des Endabschnittes des Leiterstabes und werden gegen diese gepreßt.

Zeitgleich oder zeitlich nachgelagert zu dem Pressen werden jeweils an den Leiterstab und an das Leiterteil elektrische Kontakt-Elektroden angelegt, durch die dann ein vordefinierter elektrischer Leistungs-Impuls geleitet wird, der ausreicht um an der/den Verbindungsstelle(n) das Material zum Schmelzen zu bringen.

Ein wesentlicher Gesichtspunkt ist dabei, daß die Stellen, an denen an den Leiterstab und an das Leiterteil die elektrischen Kontakt-Elektroden angelegt werden, von den Preß-Stellen unterschiedlich sind. Damit wird ein Zusammenkleben oder Verschmelzen der Kontakt-Elektroden mit den zu verbindenden Teilen vermieden.

Erfindungsgemäß ist die Leistung des Impulses so bestimmt, daß im Bereich der Verbindungsstelle im wesentlichen keine Wärme an die Umgebung abfließt. Dies wird insbesondere dadurch erreicht, daß die Leistung in einem möglichst kurzen Zeitintervall in die zu verbindenden Teile eingeleitet wird. Dadurch findet der Verschmelzungsvorgang so schnell statt, daß kaum Energie an die Umgebung abgegeben wird, bevor der Verbindungsvorgang beendet ist.

Weitere Eigenschaften, Vorteile und mögliche Abwandlungen werden für einen Fachmann anhand der nachstehenden Beschreibung deutlich, in der auf die beigefügten Zeichnungen Bezug genommen ist.

In Fig. 1 ist eine Abwicklung eines Stators für einen Elektromotor gemäß der Erfindung schematisch in der Draufsicht mit geschnittenen Statorwicklungen veranschaulicht.

In den Fig. 2 und 3 ist schematisch in perspektivischer Darstellung veranschaulicht, wie ein Leiterstab einer Wicklung gemäß Fig. 1 mit einem den Wicklungskopf bildenden Leiterteil zu verbinden ist.

In Fig. 4 ist in einer schematischen Draufsicht veranschaulicht, wie der Leiterstab und das Leiterteil aus Fig. 2, 3 zusammengepreßt und mit einem elektrischen Leistungs-Impuls beschickt werden.

In Fig. 5 ist eine alternative Ausführungsform eines Leiterteils in einer schematischen perspektivischen Darstellung gezeigt.

### Detaillierte Beschreibung der bevorzugten Ausführungsformen

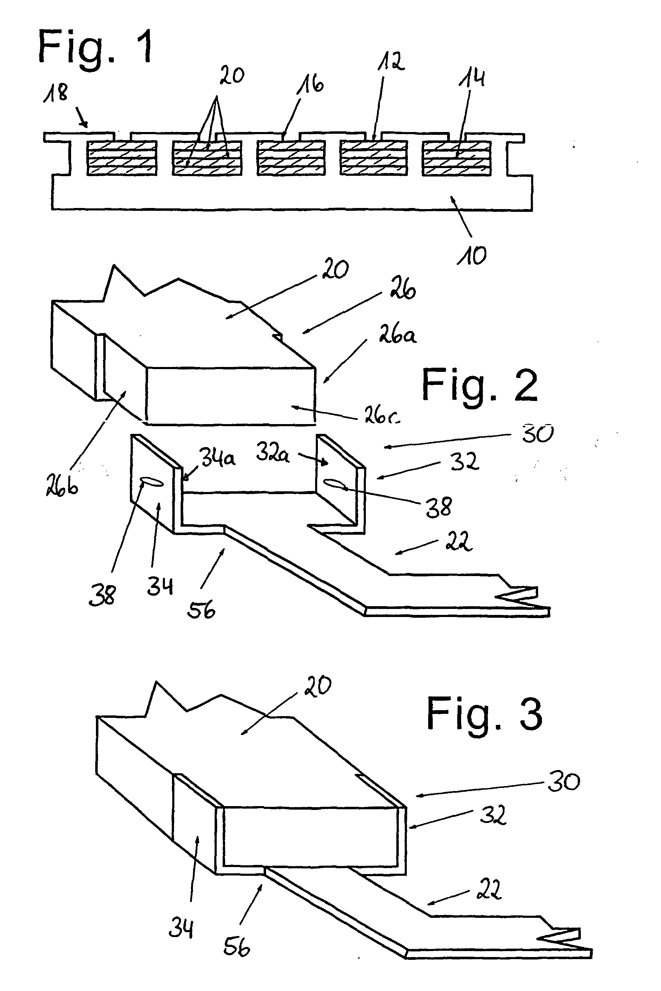

In Fig. 1 ist ein.Abschnitt einer Abwicklung eines Stators 10 einer (nicht weiter veranschaulichten) Innenläufermotormaschine in einer Draufsicht gezeigt, wobei die Erfindung auch für eine Außenläufermaschine einsetzbar ist. Der Stator 10 ist in der vorliegenden Ausführungsform aus übereinandergestapelten Blechen aufgebaut, könnte aber auch aus zu der entsprechenden Form gepreßten Eisenpartikeln bestehen.

Der Stator 10 hat nebeneinander angeordnete Nuten 12, durch die Wicklungskammern für die entsprechenden Statorspulenwicklungen 14 gebildet sind. In der gezeigten Ausführungsform haben die Wicklungskammern einen im wesentlichen rechteckigen Querschnitt, wobei sie an ihrer dem (nicht gezeigten) Rotor zugewandten Seite Schlitze 16 haben. Jeweils zwischen zwei Schlitzen 16 sind damit Zähne 18 gebildet.

Jede Statorwicklung 14 ist aus im Querschnitt im wesentlichen rechteckigen Leiterstäben 20 gebildet, welche in die Wicklungskammern eingebracht sind und mit Leiterteilen 22 verbunden sind, welche Wicklungsköpfe (siehe Fig. 2) bilden. Dabei sind die Leiterstäbe 20 an ihren Endabschnitten 26 mit den Leiterteilen 22 materialschlüssig und elektrisch verbunden. Dies ist dadurch realisiert, daß jedes der Leiterteile 22 einen im wesentlichen U-förmig gestalteten Endabschnitt 30 mit zwei gegenüberliegenden Schenkeln 32, 34 aufweist, deren einander zugewandte Innenseiten 32a, 34a mit entsprechenden Seitenflächen 26a, 26b des Endabschnittes 26 eines der Leiterstäbe 20 verbunden sind. Dabei zeigen die Fig. 2 und 3 nur die Verbindung zwischen einem Ende eines Leiterstabes 20 und einer Hälfte eines (ansonsten spiegelbildlich) aufgebauten Leiterteils 22.

Um diese Verbindung herzustellen, ist an den Seitenflächen 26a, 26b des Endabschnittes 26 des Leiterstabes 20 eine Schicht aus (Silber-)Hartlot aufgebracht.

Wie in der Ausführungsform von Fig. 3 gezeigt ist, ist der Endabschnitt 26 des Leiterstabes 20 etwa um die Wanddicke des im wesentlichen U-förmig gestalteten Endabschnittes 30 des Leiterteiles 22 verjüngt. Damit wird erreicht, daß im Bereich der Wicklungsköpfe die räumlichen Verhältnisse nicht zu sehr beengt sind, bzw. daß die Wicklungsköpfe sehr kompakt aufgebaut sein können, so daß der elektromagnetisch nicht wirksame Teil der Statorspulenwicklung relativ klein ist. Da die Leiterstäbe 20 und die Leiterteile 22 über die beiden Seitenflächen 26a, 26b bzw. Innenflächen 32a, 34a miteinander verbunden werden, wird eine sehr große Verbindungsfläche und damit eine mechanisch und elektrisch sehr sichere Verbindung erzielt.

An den einander zugewandten Innenflächen 32a, 34a der gegenüberliegenden Schenkel 32, 34 ist jeweils ein Vorsprung 38 in Form eines von der Außenseite her eingeprägten Kegels vorgesehen. Da, wie weiter unten im Detail erläutert ist, die Verbindung zwischen dem Leiterstab 20 und dem Leiterteil 22 durch Elektro-Impuls-Schweißen ausgeführt ist, wird durch diesen Vorsprung 38 bei dem Schweißvorgang eine reproduzierbare elektrische Kontaktierung und damit ein definierter Schmelzvorgang des zu verbindenden Materials erreicht.

Bei der Herstellung einer elektrischen Maschine mit dem vorstehend beschriebenen Stator 10 ist wie folgt vorzugehen: Zunächst wird ein Stator 10 (siehe Fig. 1) bereitgestellt, der die entsprechenden Nuten 12 hat. In diese Nuten 12 werden die rechteckigen Leiterstäbe 20 eingelegt, welche so bemessen sind, daß an beiden Stirnseiten des Stators 10 jeweils ein Endabschnitt 26 des Leiterstabes 20 übersteht. Durch die Verwendung von Leiterstäben 20, deren Form an die Gestalt der Nuten 12 angepaßt ist, kann die Packungsdichte (d.h. der Füllfaktor) gegenüber den üblichen Spulenwicklungen aus Runddraht erheblich gesteigert werden.

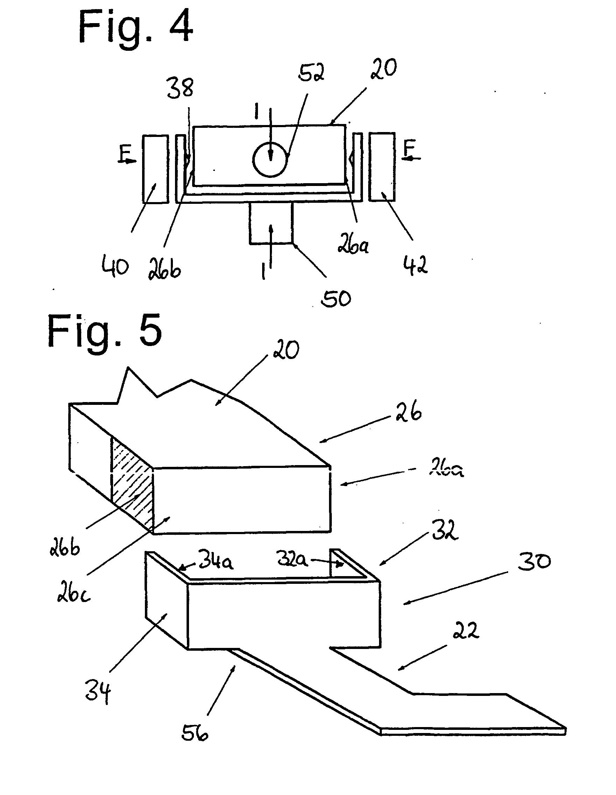

Anschließend wird ein Leiterteil 22 mit dem überstehenden Endabschnitt 26 des Leiterstabes 20 verbunden. Dazu werden die beiden gegenüberliegenden Schenkel 32, 34 des Endabschnitts 30 des Leiterteils 22 an die jeweiligen Seitenflächen 26a, 26b des Endabschnittes 26 des Leiterstabes 20 mittels zweier Preß-Backen 40, 42 gepreßt (siehe Fig. 4). Im Gegensatz zu herkömmlichen Werkzeugen zum Elektro-Impuls-Schweißen fließt durch diese Preßbacken 40, 42 kein Strom. Vielmehr werden diese lediglich durch die Kräfte F zusammengeschoben, so daß die beiden gegenüberliegenden Schenkel 32, 34 des Endabschnitts 30 des Leiterteils 22 an die jeweiligen Seitenflächen 26a, 26b des Endabschnittes 26 des Leiterstabes 20 gepreßt werden . Dabei kommen die Spitzen der Vorsprünge 38 jeweils mit Seitenflächen 26a, 26b des Endabschnittes 26 in Berührung. Gleichzeitig mit dem Zusammenpressen und der dabei auftretenden Berührung der Vorsprünge 38 mit den Seitenflächen 26a, 26b werden jeweils an den Leiterstab 20 und an das Leiterteil 22 elektrische Kontakte angelegt, durch die ein vordefinierter elektrischer Leistungs-Impuls fließt, der ausreicht, um an der/den Verbindungsstelle(n) das Material zum Schmelzen zu bringen.

Wie in Fig. 4 veranschaulicht ist, sind die Stellen, an denen an den Leiterstab 20 und an das Leiterteil 22 die elektrischen Kontakte angelegt werden, von den Stellen unterschiedlich, an denen die Preß-Backen 40, 42 die beiden gegenüberliegenden Schenkel 32, 34 des Endabschnitts 30 des Leiterteils 22 an die jeweiligen Seitenflächen 26a, 26b des Endabschnittes 26 des Leiterstabes 20 pressen. In der gezeigten Ausführungsform wird der elektrische Leistungs-Impuls durch zwei Kontakt-Stempel 50, 52 eingeleitet, die einerseits an einem Mittelsteg 56 (siehe Fig. 2, 4) des Leiterteils 22 und andererseits an einer Stirnfläche 26c des Leiterstabes 20 angelegt werden. Selbstverständlich können auch - abhängig von den räumlichen Gegebenheiten - andere Stellen zum Einleiten des elektrischen Leistungs-Impulses an dem Leiterteil 22 bzw. dem Leiterstab 20 verwendet werden. Entscheidend ist lediglich, daß die Kontaktstellen für den elektrischen Leistungs-Impuls von den Stellen unterschiedlich sind, an denen das Leiterteil 22 mit dem Leiterstab 20 verbunden (verschweißt) wird. Dadurch, daß kein elektrischer Strom durch die Krafteinleitungsstellen fließt, wird vermieden, daß die Preß-Backen 40, 42 an einem der zu verbindenden Teile ankleben.

Um den Verbindungsvorgang möglichst effizient auszuführen, wird bei einer (nicht weiter veranschaulichten) Ausführungsform der zwei Kontakt-Stempel 50, 52 zu deren Kontaktfläche mit dem jeweiligen Teil (Leiterteil 22 oder Leiterstab 20) ein Weichlot (zum Beispiel in Form eines Weichlot-Drahtes durch einen Kanal) zugeführt. Beim Einleiten des elektrischen Leistungs-Impulses schmilzt auch das Weichlot. Während die Preß-Backen 40, 42 noch die beiden Schenkel 32, 34 des Leiterteils 22 gegen den Endabschnitt 26 des Leiterstabes 20 drücken, werden die Kontakt-Stempel 50, 52 - solange das Weichlot noch flüssig ist - von dem Leiterteil 22 bzw. Leiterstab 20 abgehoben. Erst anschließend werden auch die beiden Preß-Backen 40, 42 zurückgezogen. Damit wird sichergestellt, daß keiner der Kontakt-Stempel 50, 52 an dem Leiterteil 22 oder dem Leiterstab 20 anklebt.

In Fig. 5 ist eine weitere Ausführungsform des Leiterteiles 22 bzw. des Leiterstabes 20 gezeigt, bei dem das Leiterteil 22 nur mit den beiden gegenüberliegenden Schenkeln 32, 34 seines Endabschnitts 30 an den Seitenflächen 26a, 26b des Endabschnittes 26 des Leiterstabes 20 anliegt. Diese Ausführungsform hat den Vorteil, daß der Abstand zu dem benachbarten Leiterstab 20 in der gleichen Wicklungskammer nicht durch die Verbindung des Leiterstabes 20 mit seinem jeweiligen Leiterteil 22 beeinträchtigt wird. Hierbei kann der an das Leiterteil 22 anzulegende Kontaktstempel 50 an das die Stirnfläche 26c des Leiterstabes 20 übergreifende Mittelstück 56 angelegt werden und der an den Leiterstab 20 anzulegende Kontaktstempel 52 an dem entgegengesetzten Ende des Leiterstabes 20 angelegt werden.

Ein wesentlicher Vorteil dieser Ausführungsform besteht darin, daß der Endabschnitt 26 keine Verjüngungen aufweisen muß, um eine in den kritischen Orientierungen (insbesondere zu den benachbarten Leiterstäben) raumsparende Verbindung zwischen den Leiterstäben 20 und den Leiterteilen 22 zu realisieren.

Die in den Fig. gezeigten Verhältnisse der einzelnen Teile und Abschnitten hiervon zueinander und deren Materialdicken sind nicht einschränkend zu verstehen. Vielmehr können einzelne Abmessungen auch von den gezeigten abweichen.

## Patentansprüche

1. Elektrische Maschine mit einem Stator (10), der mehrere, nebeneinander angeordnete Wicklungskammern bildende Nuten (12) zur Aufnahme von wenigstens einer Statorwicklung (14) aufweist, wobei jede Statorwicklung (14) aus im Querschnitt im wesentlichen rechteckigen Leiterstäben (20) in den Nuten (12) und Wicklungsköpfe bildenden Leiterteilen (22) aufgebaut ist, wobei die Leiterstäbe (20) an ihren Enden mit den Leiterteilen (22) elektrisch verbunden sind, indem jedes der Leiterteile (22) einen im wesentlichen U-förmig gestalteten Endabschnitt (30) mit zwei gegenüberliegenden Schenkeln (32, 34) aufweist, deren einander zugewandte Innenseiten (32a, 34a) mit entsprechenden Seitenflächen (26a, 26b) eines Endabschnittes (26) eines der Leiterstäbe (20) verbunden sind.

2. Elektrische Maschine mit einem Stator nach Anspruch 1, wobei die Verbindung zwischen dem Endabschnitt (26) des Leiterstabes (20) und dem Endabschnitt (30) des Leiterteils (22) eine Schicht aus Hartlot, vorzugsweise Silberhartlot, Zinnhartlot oder dergl. aufweist.

3. Elektrische Maschine mit einem Stator nach Anspruch 1, wobei die Verbindung zwischen dem Endabschnitt (26) Leiterstabes (20) und dem Endabschnitt (30) des Leiterteils (22) eine Schicht aus Hochtemperaturweichlot, vorzugsweise mit einem Schmelzpunkt von mindestens etwa 380 Grad Celsius aufweist.

4. Elektrische Maschine mit einem Stator nach Anspruch 1, wobei der Endabschnitt (26) des Leiterstabes (20) wenigstens etwa um die Wanddicke des im wesentlichen U-förmig gestalteten Endabschnittes (30) des Leiterteiles (22) verjüngt ist.

5. Elektrische Maschine mit einem Stator nach Anspruch 1, wobei jeder der einander gegenüberliegenden Schenkel (32, 34) an seiner dem Endabschnitt (26) des Leiterstabes (20) zugewandten Innenfläche (32a, 34a) einen Vorsprung (38) aufweist, der mit den entsprechenden Seitenflächen (26a, 26b) des Endabschnittes (26) des Leiterstabes (20) kontaktiert.

6. Elektrische Maschine mit einem Stator nach Anspruch 2 oder 3, wobei die materialschlüssige Verbindung durch Elektro-Impuls-Schweißen ausgeführt ist.

7. Elektrische Maschine mit einem Stator nach Anspruch 1, wobei das Leiterteil (22) über den Endabschnitt (26) des Leiterstabes (20) axial hinausragt und abgekröpft ist.

8. Verfahren zur Herstellung einer elektrischen Maschine mit einem Stator (10), der mehrere, an seinem Umfang verteilt angeordnete, Wicklungskammern bildende Nuten (12) zur Aufnahme von wenigstens einer Statorwicklung (14) aufweist, nach einem der vorherigen Ansprüche, mit den Schritten:
- Einbringen eines im wesentlichen rechteckigen Leiterstabes (20) in eine Nut (12), so daß an wenigstens einer Stirnseite des Stator (10) ein Endabschnitt (26) des Leiterstabes (20) übersteht,
- materialschlüssiges Anbringen eines Leiterteils (22) am überstehenden Endabschnitt (26) des Leiterstabes (20), wobei das Leiterteil (22) einen im wesentlichen U-förmig gestalteten Endabschnitt (30) mit zwei gegenüberliegenden Schenkeln (32, 34) aufweist, deren einander zugewandte Innenseiten (32a, 34a) mit entsprechenden Seitenflächen (26a, 26b) eines Endabschnittes (26) eines der Leiterstäbe (20) verbunden sind.

9. Verfahren nach Anspruch 8, wobei der Schritt des materialschlüssigen Anbringens ein Pressen der zwei gegenüberliegenden Schenkel (32, 34) an die jeweiligen Seitenflächen (26a, 26b) des Endabschnittes (26) des Leiterstabes (20) umfaßt.

10. Verfahren nach Anspruch 8, wobei zeitgleich oder zeitlich nachgelagert zu dem Pressen jeweils an den Leiterstab (20) und an das Leiterteil (22) elektrische Kontakte (50, 52) angelegt werden, durch die ein vordefinierter elektrischer Leistungs-Impuls fließt, der ausreicht um an der/den Verbindungsstelle(n) das Material zum Schmelzen zu bringen.

11. Verfahren nach Anspruch 9 und 10, wobei die Stellen, an denen an den Leiterstab (20) und an das Leiterteil (22) die elektrischen Kontakte (50, 52) angelegt werden, von den Preß-Stellen unterschiedlich sind.

12. Verfahren nach Anspruch 10, wobei die Leistung des Impulses so bestimmt ist, daß im Bereich der Verbindungsstelle im wesentlichen keine Wärme an die Umgebung abfließt.

## Claims

1. An electric machine with a stator (10) which comprises several grooves (12) arranged adjacent to one another and forming winding chambers for accommodating at least one stator winding (14), with each stator winding (14) being constructed of conductor bars (20) of an essentially rectangular cross-section in the grooves (12) and conductor portions (22) forming winding overhangs, with the conductor bars (20) being electrically connected at their ends with the conductor portions (22) in such a manner that each of the conductor portions (22) comprises an essentially U-shaped end section (30) with two opposite legs (32, 34) whose inner sides (32a, 34a) facing each other are joined with corresponding side faces (26a, 26b) of an end section (26) of one of the conductor bars (20).

2. The electric machine with a stator according to Claim 1, with the joint between the end section (26) of the conductor bar (20) and the end section (30) of the conductor portion (22) comprising a layer of brazing solder, preferably silver brazing solder, tin brazing solder, or the like.

3. The electric machine with a stator according to Claim 1, with the joint between the end section (26) of the conductor bar (20) and the end section (30) of the conductor portion (22) comprising a layer of high-temperature soft solder, preferably with a melting point of at least approx. 380°C.

4. The electric machine with a stator according to Claim 1, with the end section (26) of the conductor bar (20) being tapered by at least approx. the wall thickness of the essentially U-shaped end section (30) of the conductor portion (22).

5. The electric machine with a stator according to Claim 1, with each of the opposite legs (32, 34) comprising a projection (38) at its inner face (32a, 34a) facing towards the end section (26) of the conductor bar (20), which makes contact with the corresponding side faces (26a, 26b) of the end section (26) of the conductor bar (20).

6. The electric machine with a stator according to Claim 2 or 3, with the integral joint being made by electric impulse welding.

7. The electric machine with a stator according to Claim 1, with the conductor portion (22) protruding beyond the end section (26) of the conductor bar (20) and being cranked.

8. A method for manufacturing an electric machine with a stator (10) which comprises several grooves (12) arranged distributed about its circumference and forming winding chambers for accommodating at least one stator winding (14) according to one of the previous claims, with the steps:
- inserting an essentially rectangular conductor bar (20) into a groove (12) so that an end section (26) of the conductor bar (20) protrudes beyond at least one end face of the stator (10),
- integral joining of a conductor portion (22) with the protruding end section (26) of the conductor bar (20), with the conductor portion (22) comprising an essentially U-shaped end section (30) with two opposite legs (32, 34) whose inner sides (32a, 34a) facing each other are joined with corresponding side faces (26a, 26b) of an end section (26) of one of the conductor bars (20).

9. The method according to Claim 8, with the step of the integral joining comprising a pressing operation of the two opposite legs (32, 34) against the respective side faces (26a, 26b) of the end section (26) of the conductor bar (20).

10. The method according to Claim 8, wherein simultaneously with the pressing operation or at a later time electric contacts (50, 52) are applied to both the conductor bar (20) and the conductor portion (22), through which a predefined electric power impulse flows which is sufficient to melt the material at the joint(s).

11. The method according to Claims 9 and 10, wherein the places at which the electric contacts (50, 52) are applied to the conductor bar (20) and to the conductor portion (22) are different from the pressure-subjected places.

12. The method according to Claim 10, wherein the power of the impulse is determined in such a manner that in the area of the joint essentially no heat is dissipated to the environment.

## Revendications

1. Machine électrique avec un stator (10), lequel est muni de plusieurs rainures (12) disposées les unes à côté des autres et formant des chambres d'enroulement, pour réceptionner au moins un enroulement de stator (14), chaque enroulement de stator (14) étant constitué de baguettes conductrices (20) de section transversale sensiblement rectangulaire dans les rainures (12) et d'éléments conducteurs (22) formant des têtes d'enroulement, les baguettes de conducteurs (22) étant en liaison électrique à leur extrémité avec les éléments conducteurs (22), chacun des éléments conducteurs (22) présentant un segment d'extrémité (30) conçu sensiblement en forme de U, avec deux branches opposées (32, 34), dont les faces internes dirigées l'une vers l'autre (32a, 34a) sont reliées avec des surfaces latérales correspondantes (26a, 26b) d'un segment d'extrémité (26) d'une baguette conductrice (20).

2. Machine électrique avec un stator selon la revendication 1, la liaison entre le segment d'extrémité (26) de la baguette conductrice (20) et le segment d'extrémité (30) de l'élément conducteur (22) présentant une couche de brasure forte, de préférence de brasure forte à l'argent, de brasure forte à l'étain ou analogue.

3. Machine électrique avec un stator selon la revendication 1, la liaison entre le segment d'extrémité (26) de la baguette conductrice (20) et le segment d'extrémité (30) de l'élément conducteur (22) présentant une couche de brasure tendre haute température, de préférence avec un point de fusion à 380 degrés Celsius au moins.

4. Machine électrique avec un stator selon la revendication 1, le segment d'extrémité (26) de la baguette conductrice (20) se rétrécissant au moins de près de la valeur de l'épaisseur de paroi du segment d'extrémité (30) sensiblement conçu en forme de U de l'élément conducteurs (22).

5. Machine électrique avec un stator selon la revendication 1, chacune des branches (32, 34) opposées entre elles étant munie sur sa face interne (32a, 34a) dirigée vers le segment d'extrémité (26) de la baguette conductrice (20) d'une saillie (38) qui entre en contact avec les faces latérales (26a, 26b) correspondantes du segment d'extrémité (26) de la baguette conductrice (20).

6. Machine électrique avec un stator selon l'une des revendications 2 ou 3, la liaison par engagement de matière étant réalisée par soudage par impulsions électriques.

7. Machine électrique avec un stator selon la revendication 1, l'élément conducteur (22) saillant en direction axiale et par-dessus le segment d'extrémité (26) de la baguette conductrice (20) et étant coudé.

8. Procédé de fabrication d'une machine électrique avec un stator (10), lequel est muni de rainures (12) réparties sur sa périphérie et formant des chambres d'enroulement, destinées à réceptionner au moins un enroulement de stator (14) selon l'une quelconque des revendications précédentes, avec les étapes suivantes :
- insertion d'une baguette conductrice (20) sensiblement rectangulaire dans une rainure (12), de façon à ce qu'un segment d'extrémité de la baguette conductrice (20) dépasse au moins sur un côté frontal du stator (10).
- application par engagement de matière d'un élément conducteur (22) sur le segment d'extrémité (26) qui dépasse de la baguette conductrice (20), l'élément conducteur (22) étant muni d'un segment d'extrémité (30) conçu sensiblement en forme de U, avec deux branches opposées (32, 34), dont les faces internes (32a, 34a) qui sont tournées l'une vers l'autre (32a, 34a) sont reliées avec des surfaces latérales correspondantes (26a, 26b) d'un segment d'extrémité (26) de l'une des baguettes conductrices (20).

9. Procédé selon la revendication 8, l'étape de l'application par engagement de matière comprenant un pressage des deux branches opposées (32, 34) sur les surfaces latérales respectives (26a, 26b) du segment d'extrémité (26) de la baguette conductrice (20).

10. Procédé selon la revendication 8, simultanément au pressage ou de façon décalée dans le temps par rapport à celui-ci, des contacts électriques (50, 52) à travers lesquels circule une impulsion électrique de ligne prédéfinie, qui suffit pour mettre en fusion la matière sur la/les point(s) de liaison étant appliqués respectivement sur la baguette conductrice (20) et sur l'élément conducteur (22).

11. Procédé selon les revendications 9 et 10, les points sur lesquels les contacts électriques (50, 52) sont appliqués sur la baguette conductrice (20) et sur l'élément conducteur (22) étant différents des points de pressage.

12. Procédé selon la revendication 10, la puissance de l'impulsion étant définie de façon à éviter que de la chaleur ne soit restituée à l'environnement dans la zone du point de liaison.
